# EUROPÄISCHE PATENTSCHRIFT

(11) **EP 1 925 866 B1**
(45) Veröffentlichungstag und Bekanntmachung des Hinweises auf die Patenterteilung: **19.10.2011**
(21) Anmeldenummer: 07119930.1
(22) Anmeldetag: 02.11.2007
(51) Int. Cl.: F16L 3/12

(54) **Schelle aus Kunststoff**
Plastic clamp
Collier en matière plastique

(30) Priorität: 06.11.2006 DE 102006052499
(43) Veröffentlichungstag der Anmeldung: 28.05.2008
(73) Patentinhaber: Newfrey LLC, Newark, DE 19711 (US)
(72) Erfinder: Saltenberger, Reimar, 35641 Schöffengrund (DE); Malacarne, Marco, 10023 Chieri (TO) (IT); Ballmann, Rainer, 65719 Hofheim (DE); Kumpf, Markus, 35466 Rabenau (DE)
(74) Vertreter: Haar, Lucas Heinz Jörn

(56) Entgegenhaltungen:
- EP-A- 0 069 223
- EP-A- 0 276 926
- EP-A- 0 351 524
- WO-A-03/001069
- WO-A-2006/094609
- US-A- 4 061 299
- US-A- 4 958 791

## Beschreibung

Die Erfindung betrifft eine Schelle aus Kunststoff zum Umfassen eines Gegenstands mit einem ringförmig gebogenen Band, dessen Enden durch einen Verschluss miteinander verbindbar sind, wobei an den Enden des Bandes miteinander eine Rastkupplung bildende, gezahnte Kupplungsteile vorgesehen sind und jedes Kupplungsteil ein erstes Rastelement mit einem zur Innenseite des ringförmigen Bandes gerichteten Rastzahn und ein zweites Rastelement mit einem zur Außenseite des ringförmigen Bandes gerichteten Rastzahn aufweist und wobei die Rastelemente an den Kupplungsteilen so angeordnet sind, dass jeweils das erste Rastelement eines Kupplungsteils mit dem zweiten Rastelement des anderen Kupplungsteils beim Schließen der Rastkupplung in Eingriff gelangt wobei die ersten und zweiten Rastelemente der Kupplungsteile auf entgegengesetzten Seiten einer das Band in Längsrichtung, insbesondere mittig, teilenden Ebene angeordnet sind und die Rastelemente beider Kupplungsteile auf ihrer der Teilungsebene zugewandten Seite jeweils eine Abstützfläche haben, die so angeordnet ist, dass bei geschlossener Rastkupplung die Abstützfläche der Rastelemente des einen Kupplungsteils mit den entsprechenden Abstützflächen der Rastelemente des anderen Kupplungsteils in Eingriff treten.

Eine Schelle der angegebenen Art ist aus US-A-4 958 791 bekannt. Bei dieser Schelle liegen die Abstützflächen der Kupplungsteile nur in Teilbereichen der Kupplungsteile aneinander und bieten daher wenig Widerstand gegen Biegen. Einführschrägen sind nicht vorgesehen.

Bei einer aus DE 81 28 711 U1 bekannten Schelle sind die Rastzähne der ersten und zweiten Rastelemente jeweils übereinander angeordnet, so dass die Rastkupplung in radialer Richtung bezogen auf die Ringform des Bandes viel Platz benötigt. In seitlicher Richtung sind die Rastelemente nicht aneinander fixiert, so dass die Kupplungsteile seitlich gegeneinander verschoben werden können, um die Schelle zu öffnen. Dies ist allerdings mit dem Nachteil verbunden, dass sich die Kupplungsteile auch selbsttätig gegeneinander seitlich verschieben können und die Schelle sich ungewollt öffnet.

EP-A-0 276 926 offenbart eine Klemmschelle mit zwei mittels Rastvorrichtungen miteinander verbindbaren Endbereichen, wobei ein Endbereich gabelförmig ausgebildet ist mit axial und radial versetzten Gabelbereichen, welche entsprechend versetzte Teile des anderen Endbereichs überlappen. Die freien Enden der Gabelbereiche sind abgeschrägt, um eine Seitenfläche und einen Vorsprung des anderen Endbereichs in ein überlappendes Verhältnis zu führen, wenn die Klemmschelle geschlossen wird.

Es ist weiterhin aus DE 36 24 383 A1 eine Schelle bekannt, bei der das an einem Ende des Bandes angeordnete Kupplungsteil ein Rastelement mit nach außen gerichteten Rastzähnen hat und durch einen in Längsrichtung des Bandes verlaufenden Tunnelkanal des anderen Kupplungsteils am anderen Ende des Bandes hindurchsteckbar ist, wobei das andere Kupplungsteil am Ausgang des Tunnelkanals einen Rastarm mit nach innen gerichteten Rastzähnen hat, die in die Rastzähne des ersten Kupplungsteils eingreifen. Hierbei ist die Rastkupplung gegen selbsttätiges Lösen gesichert und kann durch Aufbiegen des Rastarms geöffnet werden. Nachteilig ist die aufwendige Gestaltung des den Tunnelkanal bildenden Kupplungsteils und die sowohl in axialer als auch in radialer Richtung relativ großen Abmessungen dieses Kupplungsteils.

Der Erfindung liegt die Aufgabe zugrunde, eine Schelle der eingangs genannten Art mit einer Rastkupplung zu schaffen, die einfach schließbar und wieder öffnenbar ist, hohe Sicherheit gegen selbsttätiges Lösen bietet und sich durch geringe äußere Abmessungen auszeichnet. Weiterhin soll die Schelle einfach und kostengünstig herstellbar sein.

Die Aufgabe wird durch eine Schelle mit den in Patentanspruch 1 angegebenen Merkmalen gelöst. Vorteilhafte Ausgestaltungen der Schelle sind in den weiteren Ansprüchen angegeben.

Nach der Erfindung sind die Abstützflächen der beiden ersten Rastelemente teilweise von einer auf der Außenseite der Kupplungsteile angeordneten, sich in Längsrichtung des Bandes erstreckenden Rippe gebildet und die Abstützflächen der ersten Rastelemente haben jeweils eine Einführschräge, die gegenüber der das Band in Längsrichtung teilenden Teilungsebene derart geneigt ist, dass die Abstützfläche sich in Richtung auf das freie Ende des Rastelements von der Teilungsebene entfernt. Durch die Rippen wird die Abstützlänge bei verrasteter Kupplung vergrößert und die Biegesteifigkeit der Rastkupplung erhöht. Die durch die Rippe verlängerte Abstützfläche ist außerdem von Vorteil, wenn nach einem weiteren Vorschlag der Erfindung an beiden Kupplungsteilen das erste Rastelement länger ist als das zweite Rastelement und die Rastzähne des ersten und zweiten Rastelements in Längsrichtung des Bandes gesehen einen Abstand voneinander haben. Die Rippen bilden dann jeweils eine seitliche Abstützung für das vordere Ende des ersten Rasteiements und tragen dadurch zur Stabilität der Rastkupplung in Querrichtung bei.

Die erfindungsgemäße Gestaltung der Rastkupplung hat weiterhin den Vorteil, dass durch die Ausbildung zweier in Bezug auf die Längsrichtung des Bandes nebeneinander liegende Rastzonen die Bauhöhe der Rastkupplung in radialer Richtung sehr gering ist. Weiterhin ergeben sich an jedem Kupplungsteil zwei Verrastungen, die die Kupplungsteile in allen Richtungen aneinander abstützen und dadurch fest miteinander verbinden. Während einer Zugbeanspruchung in Längsrichtung des Bandes in erster Linie die miteinander verhakten Rastzähne die Kupplungsteile entgegenwirken und die Rastkupplung zusammenhalten, sorgen die sich gegenseitig einmal von innen und einmal von außen übergreifenden Rastelemente für eine wirksame Abstützung der Kupplungsteile in radialer Richtung. Schließlich bewirken die Abstützflächen an den Rastelementen, dass sich die Kupplungsteile in seitlicher Richtung aneinander abstützen und nicht voneinander lösen können.

Um das Verrasten der beiden Kupplungsteile miteinander zu erleichtern, sind die vorderen Enden der ersten und zweiten Rastelemente mit in Steckrichtung den Rastzähnen vorausgehenden Rampenflächen versehen.

Das Band kann erfindungsgemäß aus einem hartelastischen Kunststoff bestehen und zur Erhöhung seiner Formsteifigkeit mit einer Längsrippe versehen sein. Um das Öffnen und Schließen des Bandes zu erleichtern, kann weiterhin auf der der Rastkupplung gegenüberliegenden Seite ein Filmscharnier vorgesehen sein. Zur Befestigung des Bandes an einer Unterlage können weiterhin hülsen- oder zapfenförmige Halteelemente an der Außenseite des Bandes angeformt sein.

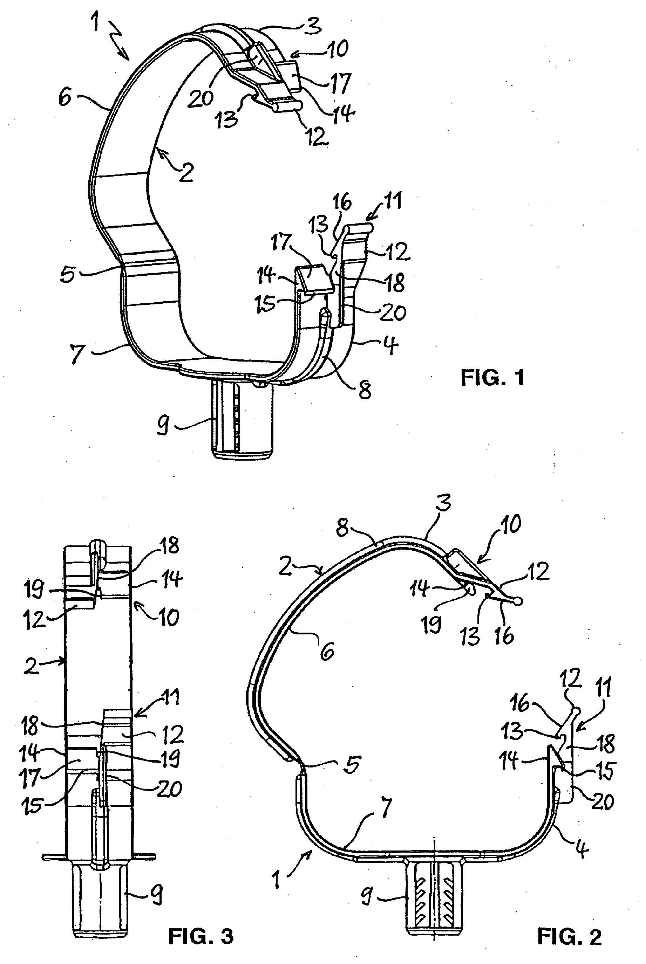

Die Erfindung wird nachfolgend anhand eines Ausführungsbeispiels näher erläutert, das in der Zeichnung dargestellt ist. Es zeigen
- Figur 1: eine perspektivische Ansicht einer Schelle nach der Erfindung in geöffnetem Zustand,
- Figur 2: eine Ansicht der Außenseite der Schelle gemäß Figur 1 im Bereich der geöffneten Rastkupplung und
- Figur 3: eine Seitenansicht der Schelle gemäß Figur 1.

Die in der Zeichnung dargestellte Schelle 1 ist einteilig aus einem thermoplastischen Kunststoff hergestellt und hat ein flaches, zu einem offenen Ring geformtes Band 2, das ungefähr in der Mitte zwischen seinen beiden Enden 3, 4 durch ein Filmscharnier 5 in zwei Bandabschnitte 6, 7 unterteilt ist. Die Bandabschnitte 6, 7 sind durch eine Längsrippe 8 auf ihrer Außenseite verstärkt. An dem Bandabschnitt 7 ist auf der Außenseite etwa in der Mitte ein hülsenförmiges Befestigungselement 9 angeformt, welches zur Befestigung des Bandes 2 an einem Gewindebolzen bestimmt ist. Anstelle des hülsenförmigen Befestigungselementes 9 können auch anders gestaltete Befestigungselemente, beispielsweise ein Befestigungszapfen zum Einsetzen in eine Befestigungsöffnung vorgesehen sein.

Um die Schelle 1 nach dem Einlegen eines zu haltenden Gegenstands, beispielsweise eines Kabelbaums, auf einfach Weise verschließen zu können, sind an den Enden 3, 4 des Bandes 2 Kupplungsteile 10, 11 einer Rastkupplung ausgebildet. Die Kupplungsteile 10, 11 sind im Wesentlichen gleich. Das Kupplungsteil 11 ist jedoch in Bezug auf das Kupplungsteil 10 um 180° gedreht, so dass die linke Seite des Kupplungsteils 10 der rechten Seite des Kupplungsteils 11 gegenüberliegt. Die Kupplungsteile 10, 11 haben ein erstes längeres Rastelement 12 mit einem zur Innenseite des Bandes 2 gerichteten Rastzahn 13 und ein zweites kürzeres Rastelement 14 mit einem zur Außenseite des Bandes 2 gerichteten Rastzahn 15. Von den Rastzähnen 13, 15 erstreckt sich bis zum vorderen Ende der Rastelemente 12, 14 jeweils eine geneigte Rampenfläche 16, 17, die beim Zusammenstecken der Kupplungsteile die einander zugeordneten Rastzähne 13, 15 aneinander vorbeiführen, damit sie leicht in die Raststellung gelangen können.

Die Rastelemente 12, 14 sind an den Kupplungsteilen 10, 11 jeweils beiderseits einer das Band 2 in Längsrichtung mittig teilenden Ebene angeordnet. Auf ihren dieser Ebene zugekehrten Seite hat jedes Rastelement 12, 14 eine Abstützfläche 18 bzw. 19. Die Abstützflächen 18 der Rastelemente 12 werden teilweise von Rippen 20 gebildet, die sich auf der Außenseite der Kupplungsteile 10, 11 befinden und sich in Längsrichtung des Bandes 2 erstrecken. Die Abstützflächen 18 sind außerdem in ihrem vorderen Bereich zur Mittelebene des Bandes 2 derart geneigt, dass ihr Abstand von der Mittelebene in Richtung auf das vordere Ende der Rastelemente 12 wächst. Hierdurch wird das Schließen der Rastkupplung erleichtert.

Zum Schließen der Rastkupplung werden die Kupplungsteile 10, 11 zusammengesteckt. Hierbei gelangt die Rampenfläche 16 des Rastelements 12 des Kupplungsteils 10 mit der Rampenfläche 17 des Rastelements 14 des Kupplungsteils 11 und gleichzeitig die Rampenfläche 16 des Rastelements 12 des Kupplungsteils 11 mit der Rampenfläche 17 des Rastelements 14 des Kupplungsteiles 10 in Eingriff. Hierdurch werden die Rastelemente 12 an beiden Kupplungsteilen 10, 11 von den Rastelementen 14 nach außen gedrückt und so weit elastisch verformt, dass ihre Rastzähne 13 über die Rastzähne 15 hinweggleiten und hinter diesen einrasten. In eingerasteter Stellung sind alle vier Rastzähne miteinander in Eingriff, wobei ihre Eingriffslänge nahezu der vollen Breite des Bandes 2 entspricht. Hierdurch können vergleichsweise hohe Haltekräfte von einem Bandende zum anderen übertragen werden. In seitlicher Richtung sind die Kupplungsteile 10, 11 ebenfalls aneinander abgestützt. In einer Richtung verhindern die aneinander liegenden Abstützflächen 18 eine seitliche Relativbewegung der Kupplungsteile 10, 11. In der anderen Richtung bewirken dies die aneinander anliegenden Abstützflächen 19. Die innenliegenden Rastelemente 14 der Kupplungsteile 10, 11 sind so ausgebildet, dass sie nach innen nicht über die Kontur des angrenzenden Bandes 2 hinausragen. Die geschlossene Schelle bildet dadurch einen Ring, der auf seiner Innenseite keine störenden Vorsprünge hat. Die außenliegenden Rastelemente 12 bilden mit ihren freien Enden Griffelemente, an denen sie von Hand oder mit Hilfe eines Werkzeugs gegriffen und so weit nach außen gebogen werden können, dass die Rastzähne außer Eingriff gelangen und die Kupplungsteile 10, 11 getrennt werden können. Die Schelle kann daher wieder geöffnet werden. Allerdings erfordert das Öffnen das gleichzeitige Hochbiegen beider Rastelemente, wodurch eine große Sicherheit gegen ungewolltes Lösen gegeben ist.

## Patentansprüche

1. Schelle (1) aus Kunststoff zum Umfassen eines Gegenstands mit einem ringförmig gebogenen Band (2), dessen Enden (3, 4) durch einen Verschluss miteinander verbindbar sind, wobei an den Enden (3, 4) des Bandes (2) miteinander eine Rastkupplung bildende, gezahnte Kupplungsteile (10, 11) vorgesehen sind und jedes Kupplungsteil (10, 11) ein erstes Rastelement (12) mit einem zur Innenseite des ringförmigen Bandes (2) gerichteten Rastzahn (13) und ein zweites Rastelement (14) mit einem zur Außenseite des ringförmigen Bandes (2) gerichteten Rastzahn (15) aufweist und wobei die Rastelemente (12, 14) an den Kupplungsteilen (10, 11) so angeordnet sind, dass jeweils das erste Rastelement (12) eines Kupplungsteils (10 bzw. 11) mit dem zweiten Rastelement (14) des anderen Kupplungsteils (11 bzw. 10) beim Schließen der Rastkupplung in Eingriff gelangt, wobei die ersten und zweiten Rastelemente (12, 14) der Kupplungsteile (10, 11) auf entgegengesetzten Seiten einer das Band (2) in Längsrichtung, insbesondere mittig, teilenden Ebene angeordnet sind und wobei die Rastelemente (12, 14) beider Kupplungsteile (10, 11) auf ihrer der Teilungsebene zugewandten Seite jeweils eine Abstützfläche (18, 19) haben, die so angeordnet ist, dass bei geschlossener Rastkupplung die Abstützflächen (18, 19) der Rastelemente (12, 14) des einen Kupplungsteils (10) mit den entsprechenden Abstützflächen (18, 19) der Rastelemente (12, 14) des anderen Kupplungsteils (11) in Eingriff treten, **dadurch gekennzeichnet, dass** die Abstützflächen (18) der beiden ersten Rastelemente (12) teilweise von einer auf der Außenseite der Kupplungsteile (10, 11) angeordneten, sich in Längsrichtung des Bandes erstreckenden Rippe (20) gebildet sind und dass die Abstützflächen (18) der ersten Rastelemente (12) eine Einführschräge haben, die gegenüber der das Band (2) in Längsrichtung teilenden Teilungsebene derart geneigt ist, dass die Abstützflächen (18) sich in Richtung der freien Enden der ersten Rastelemente (12) von der Teilungsebene entfernen.

2. Schelle nach Anspruch 1, **dadurch gekennzeichnet, dass** an beiden Kupplungsteilen (10, 11) das erste Rastelement (12) länger ist als das zweite Rastelement (14) und die Rastzähne (13, 15) des ersten und zweiten Rastelements (12, 14) in Längsrichtung des Bandes (2) gesehen einen Abstand voneinander haben.

3. Schelle nach einem der vorhergehenden Ansprüche, **dadurch gekennzeichnet, dass** die vorderen Enden der ersten und zweiten Rastelemente (12, 14) mit in Steckrichtung den Rastzähnen (13, 15) vorausgehenden Rampenflächen (16, 17) versehen sind.

4. Schelle nach einem der vorhergehenden Ansprüche, **dadurch gekennzeichnet, dass** das Band (2) aus einem hartelastischen Kunststoff besteht.

5. Schelle nach einem der vorhergehenden Ansprüche, **dadurch gekennzeichnet, dass** das Band (2) mit einer Längsrippe (8) versehen ist.

6. Schelle nach einem der vorhergehenden Ansprüche, **dadurch gekennzeichnet, dass** auf der der Rastkupplung gegenüberliegenden Seite ein Filmscharnier (5) vorgesehen ist.

7. Schelle nach einem der vorhergehenden Ansprüche, **dadurch gekennzeichnet, dass** zur Befestigung des Bandes (2) an einer Unterlage ein hülsen- oder zapfenförmiges Befestigungselement (9) an der Außenseite des Bandes (2) angeformt ist.

## Claims

1. Clamp (1) of synthetic material for enclosing an object with a band (2) bent ring-shaped, the ends (3, 4) of which are capable of being joined together by a closure, where toothed coupling sections (10, 11) together forming a latching coupling are provided at the ends (3, 4) of the band (2) and each coupling section (10, 11) has a first latching element (12) with a latching tooth (13) directed to the inner side of the ring-shaped band (2) and a second latching element (14) with a latching tooth (15) directed to the outer side of the ring-shaped band (2) and where the latching elements (12, 14) are arranged on the coupling sections (10, 11) so that in each instance the first latching element (12) of a coupling section (10 resp. 11) comes into engagement with the second latching element (14) of the other coupling section (11 resp. 10) upon closing of the latching coupling, wherein the first and second latching elements (12, 14) of the coupling sections (10, 11) are arranged on opposite sides of a plane dividing the band (2), in particular centrally, in the longitudinal direction, and wherein the latching elements (12, 14) of both coupling sections (10, 11) in each instance have, on their side turned toward the plane of division, a supporting surface (18, 19), which is arranged so that when the latching coupling is closed, the supporting surfaces (18, 19) of the latching elements (12, 14) of one coupling section (10) enter into engagement with the corresponding supporting surfaces (18, 19) of the latching elements (12, 14) of the other coupling section (11), **characterized in that** the supporting surfaces (18) of the two first latching elements (12) are formed partially by a rib (20) extending in the longitudinal direction of the band and arranged on the outer side of the coupling sections (10, 11) and **in that** the supporting surfaces (18) of the first latching elements (12) have a feed slope, which, with respect to the plane dividing the band (2) in the longitudinal direction, is inclined in such a way that the supporting surfaces (18) depart from the plane in the direction of the free ends of the latching elements (12).

2. Clamp according to claim 1, **characterized in that** on both coupling sections (10, 11) the first latching element (12) is longer than the second latching element (14) and the latching teeth (13, 15) of the first and second latching elements (12, 14), viewed in the longitudinal direction of the band (2), have a distance apart from each other.

3. Clamp according to any one of the preceding claims, **characterized in that** the front ends of the first and second latching elements (12, 14) are provided with ramp surfaces (16, 17) preceding the latching teeth (13, 15) in the direction of fitting.

4. Clamp according to any one of the preceding claims, **characterized in that** the band (2) consists of a hard elastic synthetic material.

5. Clamp according to any one of the preceding claims, **characterized in that** the band (2) is provided with a longitudinal rib (8).

6. Clamp according to any one of the preceding claims, **characterized in that** a film hinge (5) is provided on the side opposite the latching coupling.

7. Clamp according to any one of the preceding claims, **characterized in that** for fastening the band (2) to a base, sleeve-like or peg-shaped holding elements (9) are formed on the outer side of the band (2).

## Revendications

1. Collier de fixation (1) en matériau synthétique pour entourer un objet, le collier comprenant une bande (2) recourbée en anneau, dont les extrémités (3, 4) peuvent être reliées l'une à l'autre par une fermeture, des parties de couplage (10, 11) dentées aux extrémités (3, 4) de la bande (2) étant prévues, ces parties (10, 11) formant conjointement un couplage à enclique et chaque partie de couplage (10, 11) présentant un premier élément d'encliquetage (12) avec une dent d'encliquetage (13) orientée vers le côté interne de la bande annulaire (2) et un second élément d'encliquetage (14) avec une dent d'encliquetage (15) orientée vers le côté externe de la bande annulaire (2) et dans lequel les éléments d'encliquetage (12, 14) sont agencés sur les parties de couplage (10, 11) de sorte que le premier élément d'encliquetage (12) d'une partie de couplage (10 ou 11) arrive respectivement en prise avec le second élément d'encliquetage (14) de l'autre partie de couplage (11 ou 10) lors de la fermeture du couplage par encliquetage, dans lequel les premier et second éléments d'encliquetage (12, 14) des parties de couplage (10, 11) sont agencés sur des côtés opposés d'un plan séparant la bande (2) selon la direction longitudinale, en particulier un plan médian, et dans lequel les éléments d'encliquetage (12, 14) des deux parties de couplage (10, 11) ont, sur leur côté tourné vers le plan de séparation, respectivement une surface d'appui (18, 19) qui est agencée de sorte que, lorsque le couplage par encliquetage est fermé, les surfaces d'appui (18, 19) des éléments d'encliquetage (12, 14) de l'une des parties de couplage (10) soient mises en prise avec les surfaces d'appui correspondantes (18, 19) des éléments d'encliquetage (12, 14) de l'autre partie de couplage (11), **caractérisé en ce que** les surfaces d'appui (18) des deux premiers éléments d'encliquetage (12) sont formées en partie par une nervure (20) agencée sur le côté externe des parties de couplage (10, 11) et s'étendant dans la direction longitudinale de la bande et **en ce que** les surfaces d'appui (18) des premiers éléments d'encliquetage (12) ont une pente d'introduction qui est inclinée par rapport au plan de séparation séparant la bande (2) selon la direction longitudinale de sorte que les surfaces d'appui (18) s'écartent du plan de séparation en direction des extrémités libres des premiers éléments d'encliquetage (12).

2. Collier de fixation selon la revendication 1, **caractérisé en ce que**, sur les deux parties de couplage (10, 11), le premier élément d'encliquetage (12) est plus long que le second élément d'encliquetage (14) et **en ce que** les dents d'encliquetage (13, 15) des premier et second élément d'encliquetage (12, 14), vues selon la direction longitudinal de la bande (2), sont espacées l'une de l'autre.

3. Collier de fixation selon l'une quelconque des revendications précédentes, **caractérisé en ce que** les extrémités avant des premier et second éléments d'encliquetage (12, 14) sont pourvues de surfaces en forme de rampe (16,17) précédant selon la direction d'engagement les dents d'encliquetage (13,15).

4. Collier de fixation selon l'une quelconque des revendications précédentes, **caractérisé en ce que** la bande (2) est constituée d'un matériau synthétique élastique dur.

5. Collier de fixation selon l'une quelconque des revendications précédentes, **caractérisé en ce que** la bande (2) est pourvue d'une nervure longitudinale (8).

6. Collier de fixation selon l'une quelconque des revendications précédentes, **caractérisé en ce qu'**une charnière film (5) est prévue du côté opposé au couplage d'encliquetage.

7. Collier de fixation selon l'une quelconque des revendications précédentes, **caractérisé en ce que**, pour fixer la bande (2) sur un support, un élément de fixation (9) en forme de douille ou de tenon est formé sur la face externe de la bande (2).
